Europäisches Patentamt

European Patent Office

Office européen des brevets

(19)

(11) **EP 0 569 381 B1**

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(21) Anmeldenummer: **92901943.8**

(22) Anmeldetag: **07.01.1992**

(51) Int Cl.⁶: **H04N 7/14**

(86) Internationale Anmeldenummer:
**PCT/DE92/00007**

(87) Internationale Veröffentlichungsnummer:
**WO 92/14340 (20.08.1992 Gazette 1992/22)**

(54) **VERFAHREN ZUR KORREKTUR DER BLICKRICHTUNG BEIM BILDTELEFON**

METHOD OF CORRECTING THE GAZE DIRECTION FOR A VIDEOPHONE

PROCEDE PERMETTANT DE CORRIGER LA DIRECTION DU REGARD SUR UN VISIOPHONE

(84) Benannte Vertragsstaaten:
**DE FR GB NL**

(30) Priorität: **31.01.1991 DE 4102895**

(43) Veröffentlichungstag der Anmeldung:
**18.11.1993 Patentblatt 1993/46**

(73) Patentinhaber: **SIEMENS AKTIENGESELLSCHAFT
D-80333 München (DE)**

(72) Erfinder:
• **HUNDT, Eckart
D-8013 Haar (DE)**
• **RIEGEL, Thomas
D-8000 München 80 (DE)**

• **SCHWÄRTZEL, Heinz
D-8000 München 83 (DE)**
• **ZIEGLER, Manfred
D-8000 München 83 (DE)**

(56) Entgegenhaltungen:
EP-A- 0 385 128          US-A- 4 641 349
US-A- 4 730 260

• **Patent Abstracts of Japan, Band 10, Nr 233, E427 abstract of JP 61-65683**
• **Patent Abstracts of Japan, Band 13, Nr 26, E706 abstract of JP 63-228890**
• **Patent Abstracts of Japan, Band 14, Nr 225, E927 abstract of JP 02-58484**

## Beschreibung

In der Diskussion über neue Telekommunikationsdienste nimmt der Dienst "Bildfernsprechen" einen wachsenden Stellenwert ein. In Prognosen für das Jahr 2000 wird davon ausgegangen, daß nach einer vorbereitenden Schwerpunktsetzung im geschäftlichen Bereich der Großteil der Breitband-ISDN-Hauptanschlüsse auf den privaten Nutzungsbereich entfällt. Solche Prognosen sind jedoch nicht unumstritten und setzen günstige Randbedingungen voraus, wobei vor allem die Kostenfrage eine wichtige Rolle spielen wird.

Neben geringen Kosten ist jedoch auch die Lösung verschiedener ergonomischer Probleme eine wichtige Voraussetzung für die Akzeptanz des Dienstes Bildfernsprechen im privaten Teilnehmerbereich. Als ein wesentliches ergonomisches Problem im weiteren Sinne wird in der Diskussion häufig das Problem des Blickkontaktes beim Bildfernsprechen genannt.

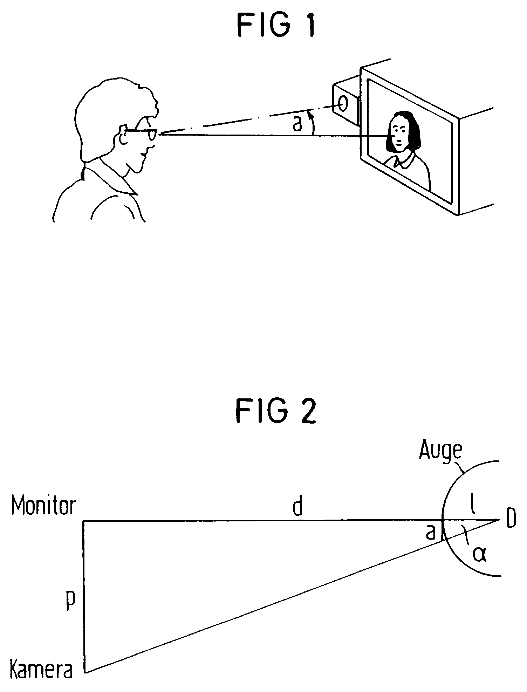

Der Blick ist neben Gestik und Mimik einer der wichtigsten Aspekte des nonverbalen Verhaltens des Menschen. Viele sozialpsychologische Untersuchungen belegen die Wichtigkeit von Blickrichtung und Blickkontakt als kommunikative Signale (A. Kendon; "Some Functions of Gaze Direction in Social Interaction", Acta Psychologica 26 (1967), Seite 1 bis 47). Bei herkömmlichen Bildtelefonendgeräten entsteht durch die Geometrie der Anordnung von Kamera, Monitor und Benutzer ein Fehlwinkel $\alpha$ zwischen der Blickrichtung auf den Monitor und der Kameraaufnahmeachse, so daß ein echter Blickkontakt im Sinne eines gegenseitigen "Sich-in-die-Augen-sehens" beider Gesprächspartner nicht möglich ist. So entsteht bei einer Anordnung nach Figur 1 der Eindruck, als ob der Partner ständig leicht nach rechts sehen würde. Dieser Effekt wird umso deutlicher, je geringer der Abstand zwischen Benutzer und Endgerät ist. Durch diese Abweichung vom echten Blickkontakt können bei Bildtelefongesprächen die kommunikativen Signale Blickrichtung und Blickkontakt reduziert bzw. verfälscht werden. Unterschiedliche technische Vorrichtungen können jedoch Blickkontakt beim Bildtelefon ermöglichen.

Bei der technischen Realisierung eines Bildtelefongerätes ohne Blickfehlwinkel kann eine Korrektur der Blickrichtung prinzipiell mit verschiedenen Verfahren erreicht werden (B.Kellner et.al., "Bildtelefon mit Blickkontakt?", NTZ Bd.38 (1985) Heft 10).

A) Verwendung eines festen Strahlteilers zwischen Kamera und Monitor.

Ein teildurchlässiger Spiegel wird vor dem Monitor so angebracht, daß der Betrachter das Monitorbild durch den Spiegel allerdings mit verminderter Helligkeit sehen kann. Die Kamera kann den Betrachter über diesen Spiegel aus der Monitorrichtung aufnehmen, so daß Aufnahme und Wiedergabe über eine Achse (Konvergenzachse) ermöglicht wird.

B) Zeitliche Verschachtelung von Aufnahme und Wiedergabe

Die Wiedergabe des Partnerbildes übernimmt ein Videoprojektor auf einem Projektionsschirm. Die Kamera befindet sich hinter dem Projektionsschirm und kann durch ein mit einem Lichtventil versehenen Fenster den Betrachter aufnehmen.

C) Räumliche Verschachtelung von Aufnahme und Wiedergabe.

Die Wiedergabe des Partnerbildes erfolgt über einen Videoprojektor auf einem teildurchlässigen Projektionsschirm (siehe z.B. EP-A-0385128) mit reflektierender Gitterstruktur. Die Kamera kann durch die durchlässige Struktur des Projektionsschirmes hindurch den Teilnehmer blickwinkelgetreu aufnehmen; der Kontrastumfang von Aufnahme und Wiedergabe verringert sich.

D) Simulation einer Bildaufnahme in der Konvergenzachse.

Die Wiedergabe des Partnerbildes übernimmt ein Monitor wie beim herkömmlichen Bildtelefon. Der Betrachter wird über mehrere Kameras aus verschiedenen Blickwinkeln am Monitorrand aufgenommen. Aus den einzelnen Teilbildern wird über einen Videoprozessor ein Bild berechnet, das Blickkontakt ermöglicht (J. Liu und R. Skerjanc, "Bildtelefon mit virtueller Kamera zur Herstellung des Blickkontaktes", 12. DAGM-Symposium, Oberkochen-Aalen, 1990).

Von den bekannten Verfahren (A-D) ist bisher nur das Verfahren A mit teildurchlässigen Spiegeln als festem Strahlteiler realisiert worden. Ein Aufbau der anderen Verfahren ist wegen technologischer Probleme bei der Realisierung eines geeigneten Lichtventils (B) oder des Projektionsschirms mit Gitterstruktur (C) bisher nicht durchgeführt worden. Bei dem Verfahren (D) ist vorerst zu prüfen, ob das berechnete Bild einer in der Mitte gedachten Kamera hinreichend genau die Bedingungen für Blickkontakte repräsentieren kann. Erst nach Kenntnis der notwendigen Rechenoperationen kann eine Abschätzung vorgenommen werden, wieweit eine Berechnung in Echtzeit bei vertretbarem Aufwand möglich ist.

Allen angegebenen Verfahren (A bis D) zur Ermöglichung von Blickkontakt beim Bildtelefon ist ein beträchtlicher Aufwand gemeinsam, welcher eine Durchsetzung dieser Technologie am Markt verhindern könnte. Die Realisierung der genannten Verfahren erfordert größere Geräte mit höheren Kosten bei verschlechterter Bildqualität auf der Aufnahme und Wiedergabeseite.

Der Erfindung liegt die Aufgabe zugrunde, ein Verfahren zur

Korrektur der Blickrichtung beim Bildtelefon anzugeben, welches die Probleme der aus der Literatur bekannten Verfahren vermeidet. Diese Aufgabe wird mit Hilfe eines Verfahrens zur Korrektur der Blickrichtung von Personen auf digitalen Bildern mit Merkmalen nach Anspruch 1 gelöst.

Bei dem Verfahren werden die Pupillen und Augäpfel einer abgebildeten Person in der Bildebene segmentiert. Die den Pupillen entsprechenden Segmente werden in der Bildebene verschoben, und frei werdende Bereiche werden mit der Farbe der Augäpfel aufgefüllt. Auf diese Weise wird ein synthetisches Bild der abgebildeten Person erzeugt, welches jedoch im Gegensatz zu der aus der Literatur bekannten Methode (D) auf die Augen der abgebildeten Personen beschränkt ist und von erheblich vereinfachten Modellen ausgeht. Dieses Verfahren ist daher erheblich einfacher und kostengünstiger zu realisieren als die aus Literatur bekannten Verfahren.

Bei der Beschreibung des erfindungsgemäßen Verfahrens wird das Wort Pupille in Abweichung vom üblichen Sprachgebrach derart verwendet, daß unter Pupille der kreisförmige, im allgemeinen gegenüber dem Augapfel dunkler, von Mensch zu Mensch jedoch verschieden gefärbte Bereich des Auges verstanden wird, welcher sich aus der Iris und der Pupille im üblichen Sinne des Wortes zusammensetzt.

Die Anwendung der Erfindung ist dabei nicht nur auf den Bereich des Bildtelefons beschränkt. Das Verfahren kann vielmehr auf alle digitalen Bilder und Bildfolgen angewendet werden, bei denen die Blickrichtung einer abgebildeten Person von Bedeutung ist siehe hier Anspruch 2. Anwendungen des Verfahrens ergeben sich deshalb auch beim Fernsehen, z.B. zur Korrektur der Blickrichtung von Nachrichtensprechern und Rednern.

Vorteilhafte Weiterbildungen der Erfindung ergeben sich aus den abhängigen Ansprüchen.

Figur 1 dient zur grundsätzlichen Verdeutlichung des der Erfindung zugrundeliegenden Problems.

Figur 2 zeigt die geometrischen Verhältnisse im Dreieck Monitor, Kamera und Auge.

Figur 3 zeigt einen Bildausschnitt mit einem menschlichen Auge und einen dazugehörigen horizontalen Grauwertverlauf.

Figur 4 zeigt die geometrischen Verhältnisse bei der optischen Abbildung.

Figur 5 zeigt ein Bild, auf welchem eine Person mit zu korrigierender Blickrichtung sichtbar ist.

Figur 6 zeigt ein Bild, auf welchem eine Person mit korrigierter Blickrichtung abgebildet ist.

Im folgenden wird die Erfindung anhand eines bevorzugten Ausführungsbeispiels und mit Hilfe der Figuren ausführlich beschrieben.

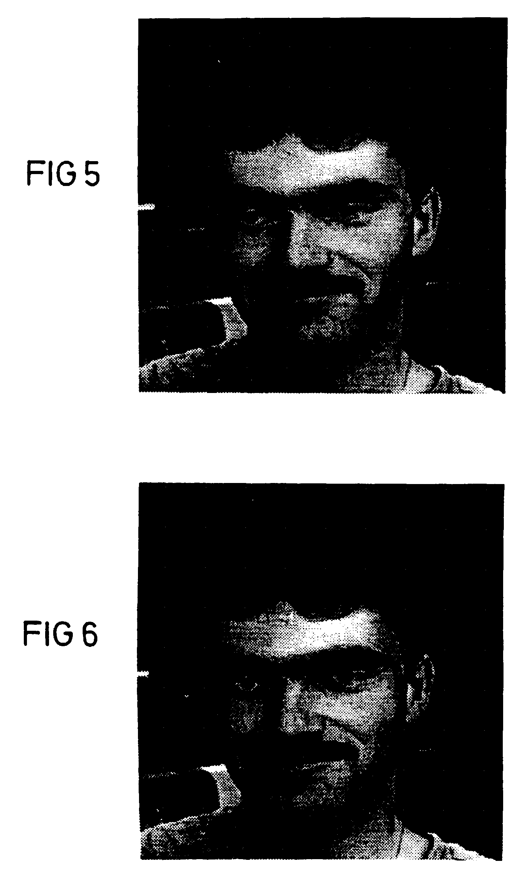

Figur 1 zeigt die geometrischen Verhältnisse bei der Aufnahme einer Person mit Hilfe einer Kamera, welche seitlich neben einem Monitor angeordnet ist, auf welchem der Gesprächspartner der aufgenommenen Person abgebildet ist. Da beide Gesprächspartner während des Gesprächs nicht in die Kamera, sondern auf den Monitor blicken, kommt es zu einem Blickfehlwinkel $\alpha$ zwischen der Blickrichtung und der Kameraachse. Wie aus Figur 1 ersichtlich, ist bei dieser Anordnung ein Blickkontakt zwischen den Gesprächspartnern nicht möglich. Figur 5 zeigt eine Person, die unter den in Figur 1 sichtbaren Bedingungen aufgenommen wurde. Die abgebildete Person schaut den Betrachter des Bildes nicht an, sondern blickt seitlich neben den Betrachter. Im folgenden wird ein Verfahren beschrieben mit dem die Blickrichtung der abgebildeten Person korrigiert wird.

Zu Beginn des Verfahrens ist im allgemeinen die Lage der Augen einer abgebildeten Person in der Bildebene völlig unbekannt. Deshalb muß zu Beginn des Verfahrens die Lage der Pupillen und der Augäpfel einer abgebildeten Person in der Bildebene ermittelt werden. Da die Lage der Pupillen und Augäpfel mit der Zeit veränderlich ist, ist es im allgemeinen sinnvoll und mit erheblichen Vorteilen hinsichtlich des Rechenaufwandes verbunden, wenn die Lage der Pupillen und Augäpfel im Laufe der Zeit mit hierzu geeigneten Methoden verfolgt wird. Auf diese Weise ist es möglich, die Lage der Pupillen und Augäpfel in der Bildebene für jeden gegebenen Zeitpunkt aus den bekannten Lagen zu früheren Zeitpunkten vorherzusagen. Mit Hilfe solcher vorhergesagter Schätzwerte für die Lagen ist eine Lagebestimmung zu jedem Zeitpunkt mit erheblich reduziertem Aufwand möglich.

Sind die Lage der Pupillen und Augäpfel für ein gegebenes Bild einer zeitlichen Bildfolge bestimmt, werden die zu den Pupillen und Augäpfeln gehörigen Bildbereiche in der Bildebene segmentiert. Die den Pupillen entsprechenden Segmente werden nun in der Bildebene verschoben. Dabei werden im Bereich der Augäpfel Bereiche frei, welche mit der Farbe der Augäpfel aufgefüllt werden. Zur Durchführung des Verfahrens werden verschiedene aus der Literatur bekannte Bildverarbeitungsmethoden benötigt, welche im folgenden, soweit sie nicht als dem Fachmann bekannt vorausgesetzt werden können, erläutert werden.

Zur Segmentation der Augenbereiche, d.h. zur Bestimmung der Lagen von Pupillen und Augäpfeln, stehen dem Fachmann eine Reihe bekannter Methoden zur Verfügung, mit denen diese Aufgabe routinemäßig zu lösen ist. Als Beispiele sollen hier die Veröffentlichungen von P. Seitz, "The Robust Recognition of Object Primitives Using Local Axes of Symmetry" Signal Processing, vol. 18, no. 1, S. 89-108 Sept. 1989 bzw. von E.L. Hines und R.A.Hutchinson, "Application of Multilayer Perceptrons to Facial Feature Location", Third International Conference on Image Processing and its Applications, Warwick, UK; 18.-20. July 1989, S. 39-43, genannt werden. In dem Aufsatz von P. Seitz ist in diesem Zusammemhang besonders das Kapitel 4 und hier die Absätze 4 und 5 von Interesse. Mit den in diesen Veröffentlichungen beschriebenen Methoden und Verfahren ist eine Bestimmung der Lage von Pupillen und Augäpfeln ohne Schwierigkeiten möglich.

Zur Verfolgung der Bewegung der Lagen von Pupillen und Augäpfeln existieren in der Literatur ebenfalls verschiedene routinemäßig anwendbare Verfahren. Als Beispiel sei hier die Veröffentlichung von J.F.S.Yau und N.D.Duffy, "Feature Tracking Method For Motion Parameter Estimation In A Model-Based Application", Third International Conference on Image Processing and its Applications, Warwick, UK; 18.-20.July 1989; S. 531 - 535, angegeben. Mit Hilfe dieses oder eines ähnlichen Standard-Tracking-Verfahrens können die zeitlichen Änderungen der Lageparameter von Pupillen und Augäpfeln verfolgt werden. Darüber hinaus ist mit Hilfe dieser Methoden eine Vorhersage von Schätzwerten dieser Lageparameter möglich.

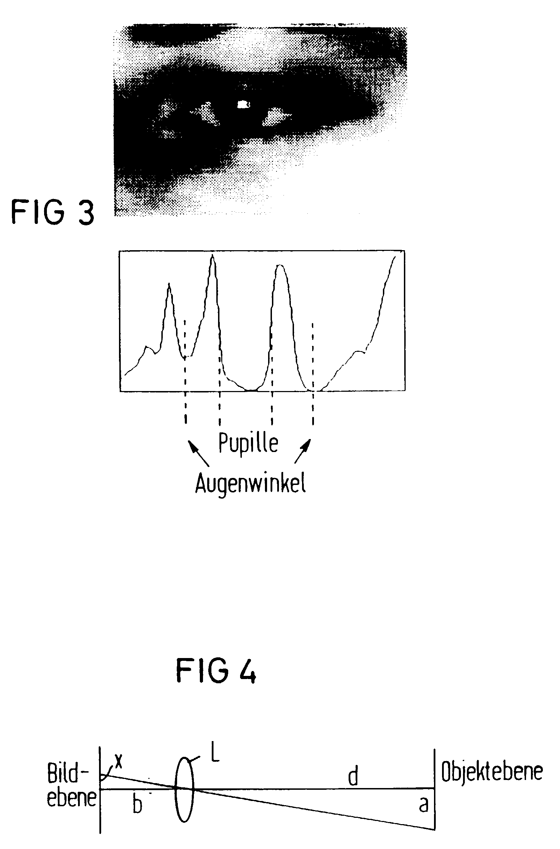

Nachdem die Augenbereiche segmentiert sind, d. h. nachdem die Lage der Pupillen und Augäpfel bestimmt ist, müssen die Pupillen und Augäpfel in der Bildebene segmentiert werden. Hierzu sind die Ränder der den Pupillen und Augäpfeln entsprechenden Segmente zu ermitteln. Diese findet man z.B. indem man den Grauwertverlauf längs einer Geraden in der Bildebene, welche das Auge durchquert, bestimmt. Die Pupillen selbst entsprechen dem zentralen Minimum eines solchen Grauwertverlaufs. Die Ränder der Pupillen ergeben sich somit mit Hilfe der Wendepunkte dieses Grauwertverlaufs, welche direkt an das zentrale Minimum angrenzen. Die Ränder des Augapfels entsprechen den Minima im Grauwertverlauf, welche dem der Pupille entsprechenden zentralen Minimum zu beiden Seiten direkt benachbart sind. Die zur Ermittlung der Pupillenränder bzw. der Augapfelränder benötigten Wendepunkte und Nebenminima des Grauwertverlaufs lassen sich bei bekanntem Grauwertverlauf in einfacher Weise ermitteln. Zur Bestimmung der geschlossenen Berandungskurven der Pupillen bzw. der Augäpfel kann der Grauwertverlauf längs mehrerer die Augen durchquerender Geraden bestimmt werden. Auf diese Weise ist die exakte Segmentierung der Pupillen und der Augäpfel in der Bildebene möglich. Figur 3 zeigt einen typischen Grauwertverlauf längs einer horizontalen Gerade durch das menschliche Auge, welches im Bild über dem Grauwertverlauf abgebildet ist. Wie aus Figur 3 ersichtlich entspricht der Pupille ein zentrales Minimum im Grauwertverlauf, und den Pupillenrändern entsprechen die diesem zentralen Minimum direkt benachbarten Wendepunkte im Grauwertverlauf. Die Augapfelränder entsprechen den dem zentralen Minimum zu beiden Seiten direkt benachbarten Nebenminima des Grauwertverlaufs.

Nachdem die Pupillen und Augäpfel in der Bildebene segmentiert sind, kann die eigentliche Blickrichtungskorrektur durch Verschiebung der Pupillensegmente in der Bildebene stattfinden. Die Figuren 2 und 4 zeigen die geometrischen Verhältnisse im Dreieck Monitor, Kamera, Augenzentrum bzw. bei der optischen Abbildung. Nach dem Strahlensatz verhält sich, wie in Figur 2 sichtbar, die Entfernung d zwischen dem Augenzentrum und dem Monitor zum Augenradius L wie der Abstand p zwischen Kamera und Monitor zur realen Pupillenverschiebung a. Die reale Pupillenverschiebung entspricht dem Lageunterschied der Pupillen beim Wechsel zwischen der Blickrichtung vom Monitor zur Kamera. Unter Zugrundelegung der Zentralprojektion als Modell für die optische Abbildung (Figur 4) ergibt sich damit bei gegebener Auflösung r der Kamera (gemessen in Pixeln pro Längeneinheit) folgender Ausdruck für die Verschiebung x der Pupillen in der Bildebene:

$$x = \frac{p \cdot L \cdot f \cdot d \cdot r}{d^2 \cdot (d-f)} \text{ Pixel}$$

Hierbei bezeichnet

d  den Abstand zwischen dem Monitor und dem Zentrum des Augapfels,
p  den Abstand zwischen Monitor und Kamera,
L  den Radius des Augapfels,
f  die Brennweite des Kameraobjektivs und
r  die Auflösung der Kamera, gemessen in Pixeln pro Längeneinheit.

Bis auf den Abstand d zwischen Monitor und dem Zentrum des Augapfels können sämtliche Parameter als bekannt und zeitlich unveränderlich vorausgesetzt werden. Bei einigen Anwendungen, bei denen der Monitorabstand d zeitlich unveränderlich ist, kann dieser dem Verfahren im Rahmen einer Verfahrensinitialisierung mitgeteilt werden. In anderen Anwendungen, in denen der Monitorabstand zeitlich veränderlich ist, muß dieser laufend gemessen werden. Für diese Abstandsmessung zwischen Auge und Monitor kommen verschiedene in der Literatur beschriebene Verfahren in Betracht. Exemplarisch seien hier die Abstandsmessung über Ultraschallentfernungsmesser oder die Abstandsmessung mit Hilfe der Brennweitenvariation (depth from focus) genannt. Beide Methoden sind der Fachwelt geläufig und routinemäßig anwendbar. Die Methode der Ultraschallentfernungsmessung wird z.B. in der Zeitschrift "Elektor" in dem anonymen Zeitschriftenaufsatz "Ultraschall-Entfernungsmesser", Bd. 19, Nr. 10 der deutschen Ausgabe, 1988, auf den Seiten 31 bis 35 beschrieben. Das andere Verfahren beschreiben Schmidt und Auer in ihrem Artikel "Autofocus: Scharfe Sache, Funkschau, Bd. 56, Nr. 24, 1984 auf den Seiten 41 bis 43.

Nach der Verschiebung der Pupillensegmente müssen die im Zuge der Verschiebung frei gewordenen Bereiche innerhalb der Augapfelsegmente mit der Farbe des Augapfels aufgefüllt werden. Zur Beseitigung eventuell auftretender störender Kanten nach der Verschiebung kann in einem Nachverarbeitungsschritt ein Tiefpaßfilter auf das veränderte digitale Bild angewandt werden. Hierdurch lassen sich im allgemeinen störende Kanten, d.h. Unstetigkeitskonturen im Grauwertlauf beseitigen.

Bei einem normalen Porträt nehmen die Augen im allgemeinen nur einen sehr kleinen Teil des Gesamtbildes ein. Hierdurch bleibt der erforderliche Rechenaufwand gering. Das Verfahren eignet sich deshalb zur Ausführung in Echtzeit.

**Patentansprüche**

1. Verfahren zur Änderung der Blickrichtung von Personen auf digitalen Bildern, bei dem

   a) Pupillen und Augäpfel einer abgebildeten Person segmentiert werden;
   b) den Pupillen entsprechende Segmente in der Bildebene verschoben werden und
   c) frei werdende Bereiche mit der Farbe der Augäpfel aufgefüllt werden.

2. Verfahren zur Änderung der Blickrichtung von Personen auf digitalen Bildern einer zeitlichen Bildfolge, bei dem

   a) Pupillen und Augäpfel einer abgebildeten Person im Hinblick auf die zeitliche Änderung ihrer Lage in der Bildebene verfolgt werden;
   b) ihre momentane Lage in der Bildebene mit Hilfe vorhergesagter Schätzwerte ermittelt wird;
   c) Pupillen und Augäpfel segmentiert werden;
   d) den Pupillen entsprechende Segmente in der Bildebene verschoben werden und
   e) frei werdende Bereiche mit der Farbe der Augäpfel aufgefüllt werden.

3. Verfahren nach einem der vorhergehenden Ansprüche, bei dem zur Segmentierung

   - Grauwertverläufe längs Geraden in der Bildebene bestimmt werden;
   - die Ränder der Pupillen mit Hilfe der Wendepunkte solcher Grauwertverläufe ermittelt werden;
   - die Ränder des Augapfels mit Hilfe der Minima solcher Grauwertverläufe ermittelt werden.

4. Verfahren nach einem der vorhergehenden Ansprüche, bei dem die Pupillen um

$$x = \frac{p \cdot L \cdot f \cdot d \cdot r}{d^2 \cdot (d - f)} \text{ Pixel}$$

verschoben werden, wobei

d   den Abstand zwischen dem Monitor und dem Zentrum des Augapfels,
p   den Abstand zwischen Monitor und Kamera,
L   den Radius des Augapfels,
f   die Brennweite des Kameraobjektivs und
r   die Auflösung der Kamera, gemessen in Pixeln pro Längeneinheit

bezeichnen.

5. Verfahren nach einem der vorhergehenden Ansprüche, bei dem störende Kanten in einem Nachverarbeitungsschnitt mittels Tiefpaßfilter beseitigt werden.

6. Verwendung eines Verfahrens nach einem der vorhergehenden Ansprüche zur Korrektur der Blickrichtung abgebildeter Personen mit dem Ziel, einen Blickkontakt zum Betrachter zu ermöglichen.

7. Verwendung eines Verfahrens nach einem der vorhergehenden Ansprüche beim Bildtelefon.

**Claims**

1. Process for altering the gaze direction of persons in digital images, in which

   a) pupils and eyeballs of a depicted person are segmented;
   b) the segments corresponding to the pupils are displaced in the image plane and
   c) areas which become free are filled in using the colour of the eyeballs.

2. Process for altering the gaze direction of persons in digital images of a sequence of images over time, in which

   a) pupils and eyeballs of a depicted person are tracked with regard to the change over time of their position in the image plane;
   b) their instantaneous position in the image plane is determined with the aid of predicted estimated values;
   c) pupils and eyeballs are segmented;
   d) segments corresponding to the pupils are displaced in the image plane and
   e) areas which become free are filled in using the colour of the eyeballs.

3. Process according to one of the preceding claims, in which for segmentation

   - grey-scale value progressions along straight lines in the image plane are determined;
   - the edges of the pupils are determined with the aid of the points of inflection of such grey-scale value progressions;
   - the edges of the eyeball are determined with the aid of the minima of such grey-scale value progressions.

4. Process according to one of the preceding claims, in which the pupils are displaced by

$$x = \frac{p \cdot L \cdot f \cdot d \cdot r}{d^2 \cdot (d\text{-}f)} \text{ pixels}$$

where

d    denotes the distance between the monitor and the centre of the eyeball,

p    denotes the distance between monitor and camera,

L    denotes the radius of the eyeball,

f    denotes the focal length of the camera lens and

r    denotes the resolution of the camera, measured in pixels per unit length.

5. Process according to one of the preceding claims, in which interfering edges are eliminated in a subsequent processing step by means of a low-pass filter.

6. Use of a process according to one of the preceding claims for correcting the gaze direction of depicted persons, with the aim of permitting visual contact with the viewer.

7. Use of a process according to one of the preceding claims for a videophone.

**Revendications**

1. Procédé pour modifier la direction du regard de personnes sur des images numériques pour lequel

     a) les pupilles et les globes oculaires d'une personne représentée sont segmentés,
     b) les segments correspondant aux pupilles sont déplacés dans le plan d'image et
     c) les zones libérées sont remplies de la couleur du globe oculaire.

2. Procédé pour modifier la direction du regard de personnes sur des images numériques d'une séquence d'images temporelle, pour lequel

     a) les pupilles et les globes oculaires d'une personne représentée sont analysés du point de vue de la modification temporelle de sa position dans le plan d'image,
     b) leurs positions provisoires dans le plan d'image sont obtenues à l'aide de valeurs estimatives prédites,
     c) les pupilles et les globes oculaires sont segmentés,
     d) les segments correspondant aux pupilles sont déplacés dans le plan d'image et
     e) les zones libérées sont remplies de la couleur du globe oculaire.

3. Procédé selon l'une des revendications précédentes pour lequel, à des fins de segmentation,

     -   on détermine les courbes de valeurs de gris le long de droites dans le plan d'image,
     -   on détermine les bordures des pupilles à l'aide des points d'inflexion des courbes de valeurs de gris de ce type,
     -   on détermine les bordures du globe oculaire à l'aide de minima de courbes de valeurs de gris de ce type.

4. Procédé selon l'une des revendications précédentes pour lequel les pupilles sont déplacées de

$$x = \frac{p \cdot L \cdot f \cdot d \cdot r}{d^2 \cdot (d\text{-}f)} \text{ Pixels}$$

où

d    désigne la distance entre l'écran de contrôle et le centre du globe oculaire,

p    la distance entre l'écran de contrôle et la caméra,

L    le rayon du globe oculaire,

f    la distance focale de l'objectif de la caméra et

r    la résolution de la caméra, mesurée en Pixels par unité de longueur.

5. Procédé selon l'une des revendications précédentes pour lequel les arêtes gênantes sont éliminées dans une phase de traitement ultérieure au moyen d'un filtre passe-bas.

6. Utilisation d'un procédé selon l'une des revendications précédentes pour corriger la direction du regard des personnes reproduites dans le but de permettre un contact visuel pour l'observateur.

7. Utilisation d'un procédé selon l'une des revendications précédentes pour un visiophone.

# FIG 1

# FIG 2

FIG 3

Pupille
Augenwinkel

FIG 4

Bildebene

x

L

b

d

a

Objektebene

FIG 5

FIG 6